# EUROPÄISCHE PATENTSCHRIFT

(11) **EP 0 998 349 B1**
(45) Veröffentlichungstag und Bekanntmachung des Hinweises auf die Patenterteilung: **12.03.2003**
(21) Anmeldenummer: 98940215.1
(22) Anmeldetag: 13.07.1998
(51) Int. Cl.: B01J 19/28, B01J 19/18, B01F 11/00

(54) **VERFAHREN UND VORRICHTUNG ZUR EINLEITUNG VON SCHALLWELLEN IN REAKTOREN**
METHOD AND DEVICE FOR INTRODUCING SOUND WAVES INTO REACTORS
PROCEDE ET DISPOSITIF POUR REPANDRE DES ONDES SONORES DANS DES REACTEURS

(30) Priorität: 19.07.1997 DE 19731099
(43) Veröffentlichungstag der Anmeldung: 10.05.2000
(73) Patentinhaber: Cognis Deutschland GmbH & Co. KG, 40589 Düsseldorf (DE)
(72) Erfinder: KÜSGEN, Rainer, D-40764 Langenfeld (DE); FIEG, Ferdinand, D-40699 Erkrath (DE); BARTSCH, Achim, D-21077 Hamburg (DE)
(86) Internationale Anmeldenummer: EP9804330
(87) Internationale Veröffentlichungsnummer: WO99003575

(56) Entgegenhaltungen:
- EP-A- 0 013 640
- WO-A-93/10895
- GB-A- 1 418 448

## Beschreibung

Die Erfindung betrifft ein Verfahren zur Einleitung von mechanischen Schwingungen in Gefäße über eine in der Gefäßwand angeordnete bewegliche Membran mittels eines Stößels sowie eine Vorrichtung zur Einleitung von durch einen Schwingerreger erzeugten Schwingungen in ein Gefäß, wobei die Schwingungen über ein Gestänge als Schwinggeber einer beweglichen Membran zuführbar sind, die in der Gefäßwand angeordnet ist.

Bei vielen chemischen Reaktionen zwischen nicht mischbaren Phasen ist es wichtig, einen möglichst guten Stoffaustausch zwischen den Phasen zu erzielen. So laufen Reaktionen zwischen Flüssigkeiten und den darin dispergierten Gasen an der Phasengrenzfläche ab. Die Gesamtreaktionsgeschwindigkeit hängt vom Stoffübergang des Gases in die flüssige Phase ab. Dieser Stoffübergang begrenzt in vielen Fällen die Reaktionsgeschwindigkeit.

Es sind Verfahren bekannt, die den Stoffübergang eines Gases in eine Flüssigkeit beschleunigen und damit Energiekosten senken oder die spezifische Volumenausbeute erhöhen oder beides. So wurde vorgeschlagen, die Reaktionsgeschwindigkeit in einem Verfahren zum Härten von ungesättigten Fetten durch katalytisches Hydrieren mit Wasserstoff dadurch zu erhöhen, daß man Ultraschall hoher Leistung auf das Reaktionsgemisch einwirken läßt. Es wurden hohe Umsatzsteigerungen gemessen, die allerdings nicht auf eine Verbesserung des Stofftransports zurückzuführen sind. Vielmehr beruhen sie durch die Wirkung der Ultraschallwellen hoher Leistung auf einer Temperaturerhöhung des Reaktionsgemisches, wie intensive Untersuchungen ergeben haben. Vergleichende Messungen mit und ohne Einwirkung von Ultraschall hoher Leistung unter isothermen Bedingungen zeigten keine Unterschiede in der Gesamtreaktionsgeschwindigkeit.

Der Anwendung dieses Vorschlags für industrielle Zwecke stehen weitere Nachteile entgegen. Die in diesem Verfahren eingesetzte Schalleistungsdichte beträgt mehr als 100 W/l Reaktionsvolumen und ist damit für industrielle Zwecke viel zu hoch. Zum anderen werden Ultraschallwellen in Gas-Flüssigkeits-Dispersionen sehr stark gedämpft, so daß die Beschallung größerer, für industrielle Zwecke geeigneter Reaktoren unwirtschaftlich ist.

In einer Veröffentlichung in Trans. Instn. Chem. Engrs. 44 (1966) T91 berichtet G. J. Jameson über ein anderes Verfahren zum Steigern des Stoffaustauschs in Gas-Flüssigkeits-Dispersionen durch Schallwellen. Hier wird eine Gas-Flüssigkeits-Säule mit niederfrequentem Schall in Resonanzschwingungen versetzt. Dieses Verfahren ist für industrielle Zwecke nicht geeignet, da man im Fall größerer Gefäße und damit hoher' Gas-Flüssigkeits-Säulen mit sehr niedrigen Frequenzen arbeiten müßte. Diese müßten unterhalb von 10 Hz liegen und Amplituden von mehr als 0,5 m aufweisen, um den Stofftransport in nennenswertem Umfang zu verbessern.

Aus der DE 44 36 064 A1 ist ein Verfahren bekannt, bei dem die Frequenz des auf die Gas-Flüssigkeits-Säule einwirkenden Schalls im wesentlichen gleich einer der Resonanzfrequenzen der Phasengrenzfläche zwischen den Gasbläschen und der Flüssigkeit ist. Dabei liegt die Leistungsdichte des Schalls unterhalb der zur Entgasung der Flüssigkeit ausreichenden Werte. Unter diesen Bedingungen wird der Stoffaustausch im Gas-Flüssigkeits-Gemisch deutlich verbessert und die Gesamtreaktionsgeschwindigkeit bei einer Flüssigkeits-Gas-Reaktion wesentlich gesteigert.

Die Schallwellen können bei einem solchen Verfahren in einen Reaktor oder in ein anderes Gefäß geleitet werden, in dem die von einem Schwingerreger erzeugten Schwingungen über ein Gestänge einer beweglichen Membran zugeführt werden. Diese Membran ist in der Reaktor- oder Gefäßwand installiert. Dies ist aber nur dann möglich, wenn an beiden Seiten der Membran im wesentlichen der gleiche Druck anliegt. Deswegen gehören zum Stand der Technik solche Anordnungen, bei denen im Gefäß oder Reaktor Umgebungsdruck herrscht. Diese Technik ist dann nicht anwendbar, wenn an den beiden Membranseiten eine solche Druckdifferenz anliegt, daß die Membran nennenswert aus ihrer neutralen oder Ruhelage gebracht wird. So drückt beispielsweise auf eine relativ kleine Membranfläche von 100 cm² bei einem Druck im Gefäß von 20 bar eine Druckkraft von etwa 2 Tonnen.

Der Erfindung liegt das technische Problem zugrunde, das eingangs beschriebene Verfahren so weiterzuentwickeln, daß es zur Schalleinleitung in Druckgefäße und Druckreaktoren geeignet ist. Dieses Problem wird dadurch gelöst, daß das Verfahren zur Einleitung von mechanischen Schwingungen derart geführt wird, daß ein gefäßseitig auf Membran und Stößel wirkender Druck durch die Anordnung von Membran und Stößel in Räumen mit in entgegensetzter Richtung wirkenden Drücken kompensiert wird, wobei der Stößel die auf ihn einwirkenden mechanischen Schwingungen spielfrei überträgt und die Räume, in denen Membran und stößel augeordnet sind, unter einem im wesentlichen gleichen Unter- oder Übordruch stehen sowie durch eine Vorrichtung, bei der das Gefäß ein Druckgefäß und die Außenseite der Membran in einem Druckraum angeordnet ist, in dem der gleiche Druck wie im Gefäß herrscht, wobei der Schwinggeber mit der Membran über einen Stößel spielfrei verbunden ist.

Mit diesem Verfahren lassen sich in einfacher und gut steuerbarer Weise Reaktionen zwischen verschiedenen Stoffen und insbesondere auch der Stoffaustausch zwischen nicht mischbaren Phasen in Druckgefäßen günstig beeinflussen. Von besonderem Vorteil ist, daß die Kraft, die durch den Gefäßinnendruck auf Membran und Stößel wirkt, durch die Anbringung der Druckkammern von der Querschnittsfläche der Membran unabhängig wird. Somit kann die Querschnittsfläche der schallübertragenden Membran relativ frei variiert werden, was bei einer technischen Anwendung des Verfahrens sehr nützlich ist.

Der Stößel, der aus der Umgebungsatmosphäre in die Druckkammer hineingeführt wird, um die vom Schwinggeber auf ihn übertragenden Schwingungen auf die Membran zu übertragen, muß druckdicht geführt werden. Dies kann zu einer Dämpfung und damit zu einer Beeinträchtigung seiner Beweglichkeit führen. Dies wird durch eine Weiterbildung der Vorrichtung verrnieden, bei der der Stößel in Bewegungsrichtung beidseitig durckkompensiert gelagert ist. Dies wird dadurch erreicht, daß im Druckraum auf der der Membran gegenüberliegenden Seite eine mit dem Stößel verbundene bewegliche Dichtung und am anderen Ende des Stößels mit diesem verbunden eine zweite bewegliche Dichtung an der Wand eines zweiten Druckraums angeordnet sind, wobei in beiden Druckräumen ein Fluid unter im wesentlichen dem gleichen Druck anliegt, der im Gefäß oder Reaktor herrscht. Weisen die beiden beweglichen Dichtungen zum Fluid gleich große Druckübertragungsflächen auf, resultieren daraus gleich große Druckkräfte, die von beiden Seiten auf den Stößel einwirken und sich in ihrer Wirkung gegenseitig aufheben.

Wenn der Schwinggeber mit dem Stößel außerhalb der beiden Druckräume und zwischen diesen verbunden ist, wird in vorteilhafter Weise vermieden, daß das Gestänge des Schwinggebers in die Druckräume geführt und damit druckisoliert werden muß. Die Verbindung der beiden Druckräume über eine Fluidleitung stellt in einfacher Weise sicher, daß in beiden Druckräumen die gleichen Fluiddrücke herrschen.

Die Ausbildung der beweglichen Dichtungen als Stülp- oder Rollmembran ermöglicht in vorteilhafter Weise eine äußerst flexible und wirkungsvolle Abdichtung, die die Beweglichkeit des Stößels nicht beeinträchtigt. Weiterhin läßt sich bei einer solchen Ausführungsform die Abstützung der Roll- oder Stülpmembran auf der dem Druckraum abgewandten Seite durch am Stößel befestigte Vorrichtungen in günstiger Weise lösen.

Die Ausbildung der Membran in der Gefäß- oder Reaktorwand in der Weise, daß sie aus einem beweglichen Membranstoff besteht, der am äußeren Rand in der Reaktorwand und im mittleren Bereich zwischen zwei Metallscheiben dicht eingespannt ist, schafft besonders günstige Voraussetzungen für die Verbindung des Stößels mit der Membran über die Metallscheiben.

Neben den erwähnten werden weitere Vorteile bei der Beschreibung eines Ausführungsbeispiels erläutert, das in beigefügter Zeichnung dargestellt ist. Darin zeigt
- Fig. 1: einen Flüssigkeits-Gas-Druckreaktor mit Schwingerreger in schematischer Darstellung und
- Fig. 2: eine Vorrichtung zur druckkompensierten Einleitung von Schwingungen in einen Druckreaktor.

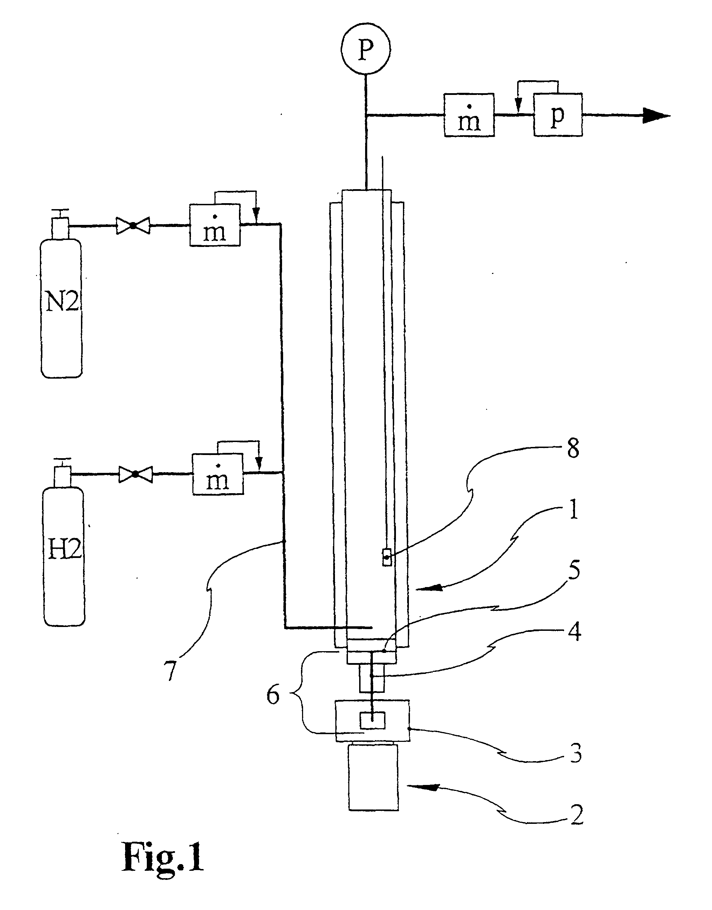

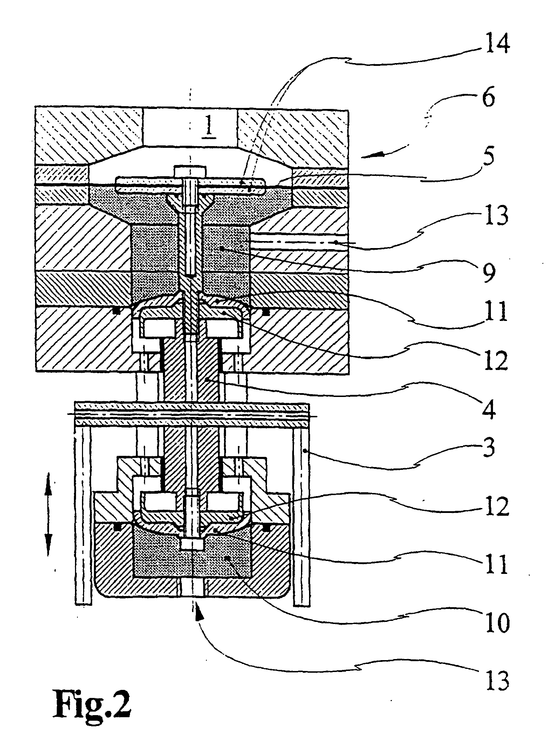

Der in Fig. 1 nur ganz schematisch dargestellte Druckreaktor für eine Gas-Flüssigkeits-Säule, beispielsweise eine Fetthärtungsapparatur, besteht aus dem Druckreaktor 1, in den über eine Leitung 7 Gase unter entsprechendem Druck eingeleitet werden. Innerhalb des Reaktorvolumens ist ein Druckaufnehmer 8 angeordnet, damit die für den Prozeßablauf erforderlichen Drücke kontrolliert und aufrechterhalten werden können. Im Boden des Druckreaktors 1 ist eine Membran 5 angeordnet, die mit einem Stößel 4 spielfrei verbunden ist, wobei die dem Reaktor abgewandte Seite der Membran 5 und der Stößel 4 in einer Druckkompensationsvorrichtung 6 angeordnet sind, die hier nur ganz schematisch angedeutet ist und anhand von Fig. 2 näher beschrieben wird. Unterhalb des Druckreaktors 1 ist ein Schwingerreger 2 dargestellt, der über ein Gestänge 3 als Schwinggeber die erzeugten Schwingungen auf den Stößel 4 und damit über die Membran 5 in den Druckreaktor 1 leiten kann. Als Schwingerreger 2 kann beispielsweise ein Schallerreger, ähnlich einem großen Lautsprecher, eingesetzt werden.

In Fig. 2 ist die Vorrichtung 6 zur druckkompensierten Einleitung von Schwingungen in den Druckreaktor 1 im einzelnen dargestellt, die in Fig. 1 nur schematisch angedeutet ist. Im oberen Teil der Abbildung ist der Bodenbereich des Druckreaktors 1 zu erkennen. Dieser wird durch die Membran 5 im Boden des Druckreaktors 1 dicht verschlossen. Auf der dem Reaktor abgewandten Seite der Membran 5 befindet sich ein oberer Druckraum 9, dessen oberer Teil eine ähnliche Form aufweist wie der untere sich konisch erweiternde Teil des Druckreaktors 1. Der untere Teil des oberen Druckraums 9 weist eine ähnliche Geometrie auf wie der später zu beschreibende untere Druckraum 10.

Das Membranmaterial der Membran 5 ist peripher und im mittleren Bereich zwischen zwei Metallscheiben 14 dicht eingespannt, die mittig mit dem oberen Ende des Stößels 4 spielfrei verbunden sind. Auf der der Membran 5 gegenüberliegenden Seite wird der obere Druckraum 9 durch eine bewegliche Dichtung 11 abgeschlossen, die im dargestellten Ausführungsbeispiel als Rolloder Stülpmembran ausgebildet ist. Auf der Rückseite der beweglichen Dichtung 11 liegt eine feste Abstützung 12 an. Dichtung 11 und Abstützung 12 sind mit dem Stößel 4 verbunden. Die Abdichtung des unteren Druckraums 10 erfolgt in der gleichen Weise wie die des oberen Druckraums 9. In beiden Druckräume 9 und 10 sind Druckausgleichsöffnungen 13 vorhanden, die über eine nicht dargestellte Druckausgleichsleitung verbunden werden können.

Zwischen den beiden Druckräumen 9 und 10 ist der Stößel 4 in atmosphärischer Umgebung mit dem Gestänge 3 verbunden, das als Schwinggeber mit dem Schwingerreger 2 in Verbindung steht. Dadurch wird gewährleistet, daß auch feinste Schwingungen, die zum Beispiel von einer Schallmembran auf das Schwinggeber-Gestänge 3 übertragen werden, hochempfindlich mechanisch auf den Stößel 4 übertragen werden. Durch den beidseitig druckkompensiert gelagerten Stößel 4, der in Richtung Druckreaktor über die Befestigungsstelle an der oberen Stülpmembran 11 und der Abstützung 12 hinaus verlängert und spielfrei mit der Membran 5 über die Metallscheiben 14 verbunden ist, kann im wesentlichen dämpfungsfrei Energie in Form von oszillierender Schwingung übertragen werden.

Die Konstruktion der Vorrichtung 6 zur druckkompensierten Einleitung von Schwingungen in den Druckreaktor 1 ermöglicht es, einen sehr großen Druckund Temperaturbereich zu beherrschen. Mit Erfolg wurde die erfindungsgemäße Vorrichtung bei Versuchen mit einem Gas-Flüssigkeits-Hochdruckreaktor zur Fetthärtung bei Gasdrücken bis zu 20 bar und Temperaturen bis zu 200 ° Celsius eingesetzt. Die Vorrichtung ist jedoch bei Verwendung geeigneter Materialien und Druckauslegung auch für Unterdruck-Reaktoren oder ganz allgemein mit anderen Grenzwerten für Unter- und Überdruck anwendbar. Als Druck-Fluide wurden mit Erfolg H₂ und N₂ getestet. Auch hier ist für die Verwendung anderer Fluide in Anpassung an den jeweiligen Reaktionsprozeß keine Einschränkung gegeben.

## Patentansprüche

1. Verfahren zur Einleitung von mechanischen Schwingungen in Gefäße über eine in der Gefäßwand angeordnete bewegliche Membran mittels eines Stößels, **dadurch gekennzeichnet, daß** ein gefäßseitig auf Membran und Stößel wirkender Druck durch die Anordnung von Membran und Stößel in Räumen mit in entgegengesetzter Richtung wirkenden Drücken kompensiert wird, wobei der Stößel die auf ihn einwirkenden mechanischen Schwingungen spielfrei überträgt und die Räume, in denen Membran und Stößel angeordnet sind, unter einem im wesentlichen gleichen Unter- oder Überdruck stehen.

2. Verfahren gemäß Anspruch 1, **dadurch gekennzeichnet, daß** man in den Wänden der Druckräume mit dem Stößel verbundene bewegliche Dichtungen einsetzt, welche gleich große Druckübertragungsflächen aufweisen.

3. Vorrichtung zur Einleitung von durch einen Schwingerreger (2) erzeugten Schwingungen in ein Gefäß (1), wobei die Schwingungen über ein Gestänge (3) als Schwinggeber einer beweglichen Membran (5) zuführbar sind, die in der Gefäßwand angeordnet ist, **dadurch gekennzeichnet, daß** das Gefäß (1) ein Druckgefäß und die Außenseite der Membran (5) in einem Druckraum (9) angeordnet ist, in dem der gleiche Druck wie im Gefäß (1) herrscht, wobei der Schwinggeber (3) mit der Membran (5) über einen Stößel (4) spielfrei verbunden ist.

4. Vorrichtung nach Anspruch 3, **dadurch gekennzeichnet, daß** im Druckraum (9) auf der der Membran (5) gegenüberliegenden Seite eine mit dem Stößel (4) verbundene bewegliche Dichtung (11) und am anderen Ende des Stößels (4) mit diesem verbunden eine zweite bewegliche Dichtung (11) in der Wand eines zweiten Druckraums (10) angeordnet sind, wobei in beiden Druckräumen (9,10) ein Fluid unter im wesentlichen dem gleichen Druck anliegt, der im Gefäß (1) herrscht.

5. Vorrichtung nach Anspruch 4, **dadurch gekennzeichnet, daß** die beiden beweglichen Dichtungen (11) zum Fluid gleich große Druckübertragungsflächen aufweisen.

6. Vorrichtung nach den Ansprüchen 4 und/oder 5, **dadurch gekennzeichnet, daß** der Schwinggeber (3) mit dem Stößel (4) zwischen den beiden Druckräumen (9, 10) verbunden ist.

7. Vorrichtung nach mindestens einem der Ansprüche 4 bis 6, **dadurch gekennzeichnet, daß** die beiden Druckräume (9,10) über eine Fluidleitung miteinander verbunden sind.

8. Vorrichtung nach mindestens einem der Ansprüche 4 bis 7, **dadurch gekennzeichnet, daß** die beweglichen Dichtungen (11) als Roll- oder Stülpmembrane ausgebildet sind.

9. Vorrichtung nach mindestens einem der Ansprüche 3 bis 8, **dadurch gekennzeichnet, daß** die Schwingungsübertragungsmembran (5) aus einem beweglichen Membranstoff besteht, der am äußeren Rand in der Gefäßwand und im mittleren Bereich zwischen zwei Metallscheiben (14) dicht eingespannt ist, wobei die Membran (5) über die Metallscheiben (14) mit dem Stößel (4) verbunden ist.

## Claims

1. A process for introducing mechanical vibrations into vessels through a flexible membrane installed in the vessel wall by means of a push rod, **characterized in that** a pressure acting on the membrane and push rod on the vessel side is compensated through the arrangement of the membrane and push rod in chambers with pressures acting in opposite directions, the push rod transmitting the mechanical vibrations acting thereon without play and the chambers in which the membrane and push rod are arranged being under substantially the same reduced pressure or excess pressure.

2. A process as claimed in claim 1, **characterized in that** flexible seals connected to the push rod with equally large pressure transmission surfaces are installed in the walls of the pressure chambers.

3. An arrangement for introducing vibrations produced by a vibration generator (2) into a vessel (1), the vibrations being designed to be delivered through a linkage (3) as vibration pickup to a flexible membrane (5) installed in the vessel wall, **characterized in that** the vessel (1) is a pressure vessel and the outside of the membrane (5) is arranged in a pressure chamber (9) in which the same pressure as in the vessel (1) prevails, the vibration pickup (3) being connected to the membrane (5) without play via a push rod (4).

4. An arrangement as claimed in claim 3, **characterized in that** a flexible seal (11) connected to the push rod (4) is installed in the pressure chamber (9) on the side opposite the membrane (5) and a second flexible seal (11) is arranged in the wall of a second pressure chamber (10) at the other end of - and connected to - the push rod (4), both pressure chambers (9,10) containing a fluid under substantially the same pressure as prevails in the vessel (1).

5. An arrangement as claimed in claim 4, **characterized in that** the two flexible seals (11) have equally large pressure transmission surfaces with respect to the fluid.

6. An arrangement as claimed in claim 4 or 5, **characterized in that** the vibration pickup (3) is connected to the push rod (4) between the two pressure chambers (9,10).

7. An arrangement as claimed in claim 4, 5 or 6, **characterized in that** the two pressure chambers (9,10) are interconnected by a fluid line.

8. An arrangement as claimed in any of claims 4 to 7, **characterized in that** the flexible seals (11) are formed by roll or cup membranes.

9. An arrangement as claimed in any of claims 3 to 8, **characterized in that** the vibration transmitting membrane (5) consists of a flexible membrane material which is clamped tight at its outer edge in the vessel wall and at its center between two metal disks (14), the membrane (5) being connected to the push rod (4) via the metal disks (12).

## Revendications

1. Procédé pour introduire des oscillations mécaniques dans des récipients par l'intermédiaire d'une membrane disposée dans la paroi du récipient mobile au moyen d'un pilon, **caractérisé en ce qu'** une pression agissant du côté du récipient sur la membrane et le pilon est compensée par la disposition de la membrane et du pilon dans des chambres où règnent des pressions agissant en sens opposé, le pilon transmettant sans jeu les oscillations mécaniques qui s'exercent sur lui, et les chambres dans lesquels la membrane et le pilon sont disposés étant sous une dépression ou une surpression sensiblement identique.

2. Procédé selon la revendication 1, **caractérisé en ce qu'** on utilise des joints mobiles liés au pilon dans les parois des chambres sous pression, et qui présentent des surfaces de transmission de pression de même taille.

3. Dispositif d'introduction d'oscillations produites par un déclencheur d'oscillations (2) dans un récipient (1), les oscillations pouvant être amenées par l'intermédiaire d'une tige (3) comme donneur d'oscillations à une membrane mobile (5) disposée dans la paroi du récipient, **caractérisé en ce que** le récipient (1) est un récipient sous pression et le côté extérieur de la membrane (5) est disposé dans une chambre sous pression (9) dans laquelle règne la même pression que dans le récipient (1), le donneur d'oscillations (3) étant relié sans jeu à la membrane (5) par l'intermédiaire d'un pilon (4).

4. Dispositif selon la revendication 3, **caractérisé en ce que** dans la chambre sous pression (9) sont disposés sur le côté opposé de la membrane (5) un joint (11) mobile lié au pilon (4), et sur l'autre extrémité du pilon (4), lié à lui, un second joint mobile (11) dans la paroi d'une seconde chambre sous pression (10), un fluide se trouvant dans les deux chambres sous pression (9, 10) essentiellement sous la même pression que celle qui règne dans le récipient (1).

5. Dispositif selon la revendication 4, **caractérisé en ce que** les deux joints mobiles (11) présentent des surfaces identiques de transfert de pression au fluide.

6. Dispositif selon les revendications 4 et/ou 5, **caractérisé en ce que** le donneur d'oscillations (3) est lié au pilon (4) entre les deux chambres sous pression (9,10).

7. Dispositif selon au moins une des revendications 4 à 6, **caractérisé en ce que** les deux chambres sous pression (9,10) sont reliées entre elles par une canalisation de fluide.

8. Dispositif selon au moins une des revendications 4 à 7, **caractérisé en ce que** les joints mobiles (11) sont formés en membrane à enroulement ou à recouvrement.

9. Dispositif selon au moins une des revendications 3 à 8, **caractérisé en ce que** la membrane de transfert d'oscillations (5) se compose d'un matériau de membrane mobile qui est monté de façon étanche sur le bord extérieur de la paroi du récipient et dans la zone centrale entre deux rondelles métalliques (14), la membrane (5) étant reliée au pilon (4) par l'intermédiaire des rondelles métalliques (14).
